(19) Europäisches Patentamt
European Patent Office
Office européen des brevets

(11) EP 3 421 515 B1

(12) EUROPEAN PATENT SPECIFICATION

(45) Date of publication and mention of the grant of the patent:
**15.07.2026 Bulletin 2026/29**

(21) Application number: **17756572.8**

(22) Date of filing: **23.02.2017**

(51) International Patent Classification (IPC):
***C08G 18/44*** *(2006.01)* ***F16C 13/00*** *(2006.01)*
***C08G 18/76*** *(2006.01)* ***C08G 18/79*** *(2006.01)*
***C08G 18/00*** *(2006.01)*

(52) Cooperative Patent Classification (CPC):
**C08G 18/44; C08G 18/006; C08G 18/7671; C08G 18/797; F16C 13/00;** C08G 18/4202

(86) International application number:
**PCT/JP2017/006770**

(87) International publication number:
**WO 2017/146134 (31.08.2017 Gazette 2017/35)**

# (54) URETHANE RESIN COMPOSITION, AND URETHANE RESIN-MOLDED ARTICLE USING SAME

URETHANHARZZUSAMMENSETZUNG UND URETHANHARZFORMARTIKEL DAMIT

COMPOSITION DE RÉSINE D’URÉTHANE ET OBJET MOULÉ EN RÉSINE D’URÉTHANE L’UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2016 JP 2016034328**

(43) Date of publication of application:
**02.01.2019 Bulletin 2019/01**

(73) Proprietor: **DIC Corporation**
**Tokyo 174-8520 (JP)**

(72) Inventors:
- **TAKIKAWA Yuko**
  **Takaishi-shi**
  **Osaka 592-0001 (JP)**
- **SAKAMOTO Tamotsu**
  **Takaishi-shi**
  **Osaka 592-0001 (JP)**

(74) Representative: **Kraus & Lederer PartGmbB**
**Thomas-Wimmer-Ring 15**
**80539 München (DE)**

(56) References cited:
**EP-A1- 0 132 967**
**WO-A1-2008/078699**
**GB-A- 837 895**
**JP-A- 2000 302 835**
**JP-A- 2004 217 844**
**JP-A- 2010 184 957**
**JP-A- H07 126 221**
**JP-A- S62 501 080**
**US-A- 3 312 653**
**US-A- 3 867 350**
**US-A- 3 900 688**
**US-A- 4 861 909**
**US-A- 5 629 402**
**US-A1- 2010 093 119**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Technical Field

The present invention relates to a urethane resin composition and a urethane resin-molded article produced using the same.

### Background Art

Molded articles produced using a urethane resin composition are currently used in various applications such as automobile parts, home appliance parts, packaging materials, leather-like sheets, and printing rolls.

The molded article is required to have various properties corresponding to the application thereof. For example, in a case where the molded article is used as an elastic member of a printing roll, the surface of the molded article may undergo dissolution, deformation, discoloration, or the like, because an organic solvent-type ink is mainly used in the printing. For this reason, the industry has demanded development of a polyurethane-molded article with high solvent resistance.

A urethane elastomer including a succinic acid-based polyester polyol and tolylene diisocyanate is disclosed as a polyurethane-molded article with high solvent resistance (for example, refer to examples of PTL 1).

In recent years, however, environmental harmony is required, and thus water-based inks are increasingly used instead of the organic solvent-type inks. In such a current situation, emphasis is placed on development of molded articles with high hydrolysis resistance. In addition, since a small amount of a solvent or a cleaning solvent is used even for the water-based inks, solvent resistance is still required as in the related art.

Thus, the industry has strongly demanded a urethane resin composition having both high solvent resistance and high hydrolysis resistance, as well as a molded article produced using such a composition. At present, however, such a urethane resin composition has been not found yet.

### Citation List

### Patent Literature

PTL 1: JP-A-5-301335

Among further prior art, related urethane compositions prepared from polyisocyanates and polycarbonates based on ethylene glycol or its oligomeric forms are described in GB 737 895 A, JP 2000-302835 A, US 4 861 909 A, US 2010/093119 A1, US 5,629,402 A, EP 0 132 967 A1, US 3,900,688 A, US 3,867,350 A, and US 3,312,653 A.

### Summary of Invention

### Technical Problem

An object of the present invention is to provide a urethane resin composition capable of forming a urethane resin-molded article with high solvent resistance and high hydrolysis resistance.

### Solution to Problem

As a result of intensive studies to achieve the above object, the present inventors have found that the above object can be achieved by using, as a polyol component for a urethane resin, a polycarbonate polyol produced using a specific hydroxy compound as a raw material, and thereby has completed the invention.

Specifically, as defined in claim 1, the present invention relates to a urethane resin composition including a urethane resin that is a product of reaction of at least one polyol (A) including a polycarbonate polyol (a1) with a polyisocyanate (B), in which the polycarbonate polyol (a1) is a compound produced using, as a raw material, at least one hydroxy compound (C) including a hydroxy compound (c1) represented by general formula (1).

[Chem. 1]

$$HO\left[(CH_2)_2O\right]_nH \qquad (1)$$

In general formula (1), n is an integer of 1 to 7. Advantageous Effects of Invention

The urethane resin composition of the present invention is capable of forming a urethane resin-molded article with high solvent resistance and high hydrolysis resistance. Therefore, the urethane resin composition of the present invention can be advantageously used for applications requiring solvent resistance and hydrolysis resistance, such as automobile parts, home appliance parts, packaging materials, leather-like sheets, printing rolls, and coater rolls.

Description of Embodiments

The urethane resin composition of the present invention is a urethane resin composition including a urethane resin that is a product of reaction of at least one polyol (A) including a polycarbonate polyol (a1) with a polyisocyanate (B), in which the polycarbonate polyol (a1) is a compound produced using, as a raw material, at least one hydroxy compound (C) including a hydroxy compound (c1) represented by general formula (1).

The urethane resin used is a product of reaction of at least one polyol (A) including a polycarbonate polyol (a1) with a polyisocyanate (B).

The polycarbonate polyol (a1) used may be, for example, one obtained by subjecting at least one hydroxy compound (C) including a hydroxy compound (c1) represented by general formula (1) to a transesterification reaction with a carbonate compound. The polycarbonate polyol (a1) used may also be one obtained by using a known production method, such as one obtained by subjecting the hydroxy compound (C) to a reaction with phosgene.

The polycarbonate polyol (a1) has a number average molecular weight in the range of 1000 to 4000. In this regard, the number average molecular weight of the polycarbonate polyol (a1) refers to a value measured by a gel permeation chromatography (GPC) method under the following conditions.

Measuring device: High speed GPC device (HLC-8220GPC manufactured by TOSOH CORPORATION)
Columns: The following columns manufactured by TOSOH CORPORATION are connected in series and used.

TSKgel G5000 (7.8 mmI.D. × 30 cm) × one

TSKgel G4000 (7.8 mmI.D. × 30 cm) × one

TSKgel G3000 (7.8 mmI.D. × 30 cm) × one

TSKgel G2000 (7.8 mmI.D. × 30 cm) × one

Detector: RI (differential refractometer)
Column temperature: 40°C
Eluent: tetrahydrofuran (THF)
Flow rate: 1.0 mL/min
Injection volume: 100 μL (a tetrahydrofuran solution with a sample concentration of 0.4% by mass)
Standard samples: a calibration curve is prepared using the following standard polystyrene samples.

(Standard polystyrene)

TSKgel standard polystyrene A-500 manufactured by TOSOH CORPORATION
TSKgel standard polystyrene A-1000 manufactured by TOSOH CORPORATION
TSKgel standard polystyrene A-2500 manufactured by TOSOH CORPORATION
TSKgel standard polystyrene A-5000 manufactured by TOSOH CORPORATION
TSKgel standard polystyrene F-1 manufactured by TOSOH CORPORATION
TSKgel standard polystyrene F-2 manufactured by TOSOH CORPORATION
TSKgel standard polystyrene F-4 manufactured by TOSOH CORPORATION
TSKgel standard polystyrene F-10 manufactured by TOSOH CORPORATION
TSKgel standard polystyrene F-20 manufactured by TOSOH CORPORATION
TSKgel standard polystyrene F-40 manufactured by TOSOH CORPORATION
TSKgel standard polystyrene F-80 manufactured by TOSOH CORPORATION

TSKgel standard polystyrene F-128 manufactured by TOSOH CORPORATION
TSKgel standard polystyrene F-288 manufactured by TOSOH CORPORATION
TSKgel standard polystyrene F-550 manufactured by TOSOH CORPORATION

The content of the polycarbonate polyol (a1) in the at least one polyol (A) is preferably 40% by mass to 100% by mass, more preferably 60% by mass to 99% by mass, so that a urethane resin-molded article with higher solvent resistance and higher hydrolysis resistance can be formed.

It is essential to use, as the hydroxy compound (C), the hydroxy compound (c1) represented by general formula (1).

[Chem. 2]

$$HO\left[(CH_2)_2O\right]_nH \qquad (1)$$

In general formula (1), n is an integer of 1 to 7.

Examples of the hydroxy compound (c1) include ethylene glycol, diethylene glycol, triethylene glycol, and polyethylene glycol. Among them, ethylene glycol, diethylene glycol, and triethylene glycol are preferable, so that a urethane resin-molded article with higher solvent resistance and higher hydrolysis resistance can be obtained. In addition, these hydroxy compounds can be used alone or two or more kinds thereof can be used in combination.

The content of the hydroxy compound (c1) is preferably 40% by mass to 100% by mass, more preferably 60% by mass to 99% by mass of the total amount of the at least one hydroxy compound (C), so that a urethane resin-molded article with higher solvent resistance can be formed.

The content of diethylene glycol as the hydroxy compound (c1) in the at least one hydroxy compound (C) is preferably 40% by mass to 99% by mass.

In addition to the hydroxy compound (c1), any other hydroxy compound may be used as the hydroxy compound (C).

Examples of other hydroxy compounds include propylene glycol, butanediol, pentanediol, hexanediol, and trimethylolpropane. Among them, trimethylolpropane is preferable, so that a urethane resin-molded article with higher solvent resistance and higher hydrolysis resistance can be obtained. These hydroxy compounds can be used alone or two or more kinds thereof can be used in combination.

Examples of the carbonate compound include dimethyl carbonate, diethyl carbonate, ethyl methyl carbonate, di-n-butyl carbonate, diisobutyl carbonate, ethyl-n-butyl carbonate, ethyl isobutyl carbonate, diphenyl carbonate, dibenzyl carbonate, ethylene carbonate, trimethylene carbonate, tetramethylene carbonate, 1,2-propylene carbonate, 1,2-butylene carbonate, 1,3-butylene carbonate, 2,3-butylene carbonate, 1,2-pentylene carbonate, 1,3-pentylene carbonate, 1,4-pentylene carbonate, 1,5-pentylene carbonate, 2,3-pentylene carbonate, and 2,4-pentylene carbonate. Among them, dimethyl carbonate, ethyl methyl carbonate, diethyl carbonate, and diphenyl carbonate are preferable, so that a urethane resin-molded article with high solvent resistance and high hydrolysis resistance can be obtained. In addition, these carbonate compounds can be used alone or two or more kinds thereof can be used in combination.

In the present invention, in addition to the polycarbonate polyol (a1), another polyol (a2) may be used in combination as long as the advantageous effects of the present invention are not impaired.

Examples of the polyol (a2) include polyester polyols, polyether polyols, and polyols other than the polycarbonate polyol (a1).

Examples of the polyester polyols include polyester polyols obtained by subjecting a low molecular weight polyol to a reaction with a polycarboxylic acid; polyester polyols obtained by subjecting a cyclic ester compound such as ε-caprolactone to a ring-opening polymerization reaction; and polyester polyols obtained by polymerizing these polyester polyols. These polyester polyols can be used alone or two or more kinds thereof can be used in combination.

Examples of the low molecular weight polyol include aliphatic polyols having a molecular weight of about 50 to 300 such as ethylene glycol, propylene glycol, 1,4-butanediol, 1, 6-hexanediol, diethylene glycol, neopentyl glycol, and 1,3-butanediol; polyols having an aliphatic cyclic structure such as cyclohexane dimethanol; and polyols having an aromatic structure such as bisphenol A and bisphenol F.

Examples of the polycarboxylic acid that may be used for preparation of the polyester polyol include aliphatic polycarboxylic acids such as succinic acid, adipic acid, sebacic acid, and dodecanedicarboxylic acid; aromatic polycarboxylic acids such as terephthalic acid, isophthalic acid, phthalic acid, and naphthalenedicarboxylic acid; and anhydrides or esterified products thereof.

Examples of the polyether polyols include those obtained by addition polymerization of an alkylene oxide using, as an initiator, one or more compounds having two or more active hydrogen atoms. Examples of the compound having two

or more active hydrogen atoms include propylene glycol, trimethylene glycol, 1,3-butanediol, 1,4-butanediol, 1, 6-hexanediol, neopentyl glycol, glycerin, diglycerin, trimethylolethane, trimethylolpropane, water, and hexanetriol. Examples of the alkylene oxide include propylene oxide, butylene oxide, styrene oxide, epichlorohydrin, and tetrahydrofuran. These polyether polyols can be used alone or two or more kinds thereof can be used in combination.

Examples of polycarbonate polyols other than the polycarbonate polyol (a1) include those obtained by subjecting other hydroxy compounds mentioned above to a reaction with the carbonate compound.

The polyisocyanate (B) for used in preparing the urethane resin comprises 4,4'-diphenylmethane diisocyanate, 2,4'-diphenylmethane diisocyanate, carbodiimide-modified diphenylmethane diisocyanate, or crude diphenylmethane diisocyanate. In addition, these polyisocyanates can be used alone or two or more kinds thereof can be used in combination.

The reaction between the polyol (A) and polyisocyanate (B) is preferably performed with an equivalent ratio [NCO]/[OH] between the polyisocyanate (B) and the polyol (A) in the range of 0.5 to 2.5, more preferably in the range of 0.7 to 1.1, in which [NCO] represents the isocyanate group equivalent of the polyisocyanate (B), and [OH] represents the hydroxyl equivalent of the polyol.

The urethane resin composition of the present invention may include, if necessary, a chain extender in addition to the polyol (A) and the polyisocyanate (B), so that a urethane resin-molded article with higher solvent resistance and higher hydrolysis resistance can be formed.

Examples of the chain extender include ethylene glycol, 1,2-propanediol, 1,3-butanediol, 1,4-butanediol, 2,3-butanediol, 3-methyl-1,5-pentanediol, 1,6-hexanediol, 3,3'-dimethylol heptane, 1,4-cyclohexanedimethanol, neopentyl glycol, 3,3-bis (hydroxymethyl) heptane, diethylene glycol, dipropylene glycol, polyethylene glycol, polypropylene glycol, polybutylene glycol, glycerin, trimethylolpropane, sorbitol, 1,4-bis (2-hydroxyethoxy) benzene, and 1,3-bis (2-hydroxyethoxy) benzene.

If necessary, the urethane resin composition of the present invention may further contain an additive. Any of various known additives, such as a plasticizer, a filler, a pigment, a dye, a stabilizer, and a flame retardant may be used as long as the advantageous effects of the present invention are not impaired.

Examples of the urethane resin-molded article of the present invention include those obtained by heat-molding the urethane resin composition.

The heat-molding method may be, for example, a method that includes injecting the urethane resin composition, which has been uniformly mixed, into a sheet-shaped mold or a cylindrical mold and thermally curing the urethane resin composition.

The thermal curing preferably includes performing primary curing at 100°C to 150°C for 1 to 4 hours and then performing secondary curing at 90°C to 130°C for 10 to 20 hours.

The urethane formation reaction of the urethane resin composition is preferably completed after the thermal curing.

The urethane resin-molded article of the present invention can be advantageously used for applications requiring solvent resistance and hydrolysis resistance, such as automobile parts, home appliance parts, packaging materials, leather-like sheets, printing rolls, coater rolls, printing squeegees, and doctor blades. Among them, it can be advantageously used particularly as an elastic member for printing rolls, coater rolls, printing squeegees, or doctor blades.

## Examples

Hereinafter, the present invention will be more specifically described with reference to examples and comparative examples.

(Synthesis Example 1: Synthesis of polycarbonate polyol (1))

A four-necked flask equipped with a thermometer, a stirrer, an inert gas inlet, and a reflux condenser was charged with 100 parts by mass of diethylene glycol and 193 parts by mass of diphenyl carbonate, and 0.01% by weight of tetraisopropyl titanate as an esterification catalyst was added thereto. The mixture was allowed to react at 200°C for 5 hours and then allowed to react under reduced pressure conditions for 10 hours, so that a polycarbonate polyol (1) was obtained. The polycarbonate polyol (1) had a hydroxyl value of 32.0 mgKOH/g.

(Synthesis Example 2: Synthesis of polycarbonate polyol (2))

A four-necked flask equipped with a thermometer, a stirrer, an inert gas inlet, and a reflux condenser was charged with 15 parts by mass pf ethylene glycol, 50 parts by mass of diethylene glycol, 35 parts by mass of triethylene glycol, and 189 parts by mass of diphenyl carbonate, and 0.01% by weight of tetraisopropyl titanate as an esterification catalyst was added thereto. The mixture was allowed to react at 200°C for 5 hours and then allowed to react under reduced pressure

conditions for 10 hours, so that a polycarbonate polyol (2) was obtained. The polycarbonate polyol (2) had a hydroxyl value of 60.0 mgKOH/g.

(Synthesis Example 3: Synthesis of polycarbonate polyol (3))

A four-necked flask equipped with a thermometer, a stirrer, an inert gas inlet, and a reflux condenser was charged with 50 parts by mass of diethylene glycol, 50 parts by mass of polyethylene glycol (PEG#200 manufactured by NOF CORPORATION), and 140 parts by mass of diphenyl carbonate, and 0. 01% by weight of tetraisopropyl titanate as an esterification catalyst was added thereto. The mixture was allowed to react at 200°C for 5 hours and then allowed to react under reduced pressure conditions for 10 hours, so that a polycarbonate polyol (3) was obtained. The polycarbonate polyol (3) had a hydroxyl value of 58.7 mgKOH/g.

(Synthesis Example 4: Synthesis of polycarbonate polyol (4))

A four-necked flask equipped with a thermometer, a stirrer, an inert gas inlet, and a reflux condenser was charged with 97 parts by mass of diethylene glycol, 3 parts by mass of trimethylolpropane, and 193 parts by mass of diphenyl carbonate, and 0.01% by weight of tetraisopropyl titanate as an esterification catalyst was added thereto. The mixture was allowed to react at 200°C for 5 hours and then allowed to react under reduced pressure conditions for 10 hours, so that a polycarbonate polyol (4) was obtained. The polycarbonate polyol (4) had a hydroxyl value of 35.4 mgKOH/g.

(Synthesis Example 5: Synthesis of polycarbonate polyol (5))

A four-necked flask equipped with a thermometer, a stirrer, an inert gas inlet, and a reflux condenser was charged with 50 parts by mass of diethylene glycol, 50 parts by mass of polyethylene glycol (PEG#400 manufactured by NOF CORPORATION), and 114 parts by mass of diphenyl carbonate, and 0. 01% by weight of tetraisopropyl titanate as an esterification catalyst was added thereto. The mixture was allowed to react at 200°C for 5 hours and then allowed to react under reduced pressure conditions for 10 hours, so that a polycarbonate polyol (5) was obtained. The polycarbonate polyol (5) had a hydroxyl value of t was 59.4 mgKOH/g.

(Synthesis Example 6: Synthesis of polycarbonate polyol (6))

A four-necked flask equipped with a thermometer, a stirrer, an inert gas inlet, and a reflux condenser was charged with 60 parts by mass of diethylene glycol, 40 parts by mass of butanediol, and 200 parts by mass of diphenyl carbonate, and 0.01% by weight of tetraisopropyl titanate as an esterification catalyst was added thereto. The mixture was allowed to react at 200°C for 5 hours and then allowed to react under reduced pressure conditions for 10 hours, so that a polycarbonate polyol (6) was obtained. The polycarbonate polyol (6) had a hydroxyl value of 56.2 mgKOH/g.

(Synthesis Example 7: Synthesis of polycarbonate polyol (7))

A four-necked flask equipped with a thermometer, a stirrer, an inert gas inlet, and a reflux condenser was charged with 100 parts by mass of butanediol and 132 parts by mass of diethyl carbonate, and 0.01% by weight of tetraisopropyl titanate as an esterification catalyst was added thereto. The mixture was allowed to react at 120°C for 10 hours then at 190°C for 2 hours, and then allowed to react for 10 hours while the pressure was reduced, so that a polycarbonate polyol (7) was obtained. The polycarbonate polyol (7) had a hydroxyl value of 55.7 mgKOH/g.

(Synthesis Example 8: Synthesis of polycarbonate polyol (8))

A four-necked flask equipped with a thermometer, a stirrer, an inert gas inlet, and a reflux condenser was charged with 30 parts by mass of diethylene glycol, 70 parts by mass of butanediol, and 125 parts by mass of diethyl carbonate, and 0.01% by weight of tetraisopropyl titanate as an esterification catalyst was added thereto. The mixture was allowed to react at 120°C for 10 hours then at 190°C for 2 hours, and then allowed to react for 10 hours while the pressure was reduced, so that a polycarbonate polyol (8) was obtained. The polycarbonate polyol (8) had a hydroxyl value of 56.5 mgKOH/g.

(Synthesis Example 9: Synthesis of polycarbonate polyol (9))

A four-necked flask equipped with a thermometer, a stirrer, an inert gas inlet, and a reflux condenser was charged with 100 parts by mass of butanediol and 132 parts by mass of diethyl carbonate, and 0.01% by weight of tetraisopropyl titanate as an esterification catalyst was added thereto. The mixture was allowed to react at 120°C for 10 hours then at

190°C for 2 hours, and then allowed to react for 10 hours while the pressure was reduced, so that a polycarbonate polyol (9) was obtained. The polycarbonate polyol (9) had a hydroxyl value of 55.7 mgKOH/g.

The raw materials and the hydroxyl values of the polycarbonate polyols synthesized in Synthesis Examples 1 to 9 are shown in Table 1.

[Table 1]

| | | | Synthesis Example 1 | Synthesis Example 2 | Synthesis Example 3 | Synthesis Example 4 | Synthesis Example 5 | Synthesis Example 6 | Synthesis Example 7 | Synthesis Example 8 | Synthesis Example 9 |
|---|---|---|---|---|---|---|---|---|---|---|---|
| Polycarbonate polyol | | | (1) | (2) | (3) | (4) | (5) | (6) | (7) | (8) | (9) |
| Hydroxy compound | DEG | Parts by mass | 100 | 50 | 50 | 97 | 50 | 60 | 40 | 30 | |
| | EG | | | 15 | | | | | | | |
| | TEG | | | 35 | | | | | | | |
| | PEG200 | | | | 50 | | | | | | |
| | TMP | | | | | 3 | | | | | |
| | PEG400 | | | | | | 50 | | | | |
| | BG | | | | | | | 40 | 60 | 70 | 100 |
| Carbonate compound | DPC | | 193 | 189 | 140 | 193 | 114 | 200 | | | |
| | DEC | | | | | | | | 125 | 127 | 132 |
| Hydroxyl value (mgKOH/g) | | | 32.0 | 60.0 | 58.7 | 35.4 | 59.4 | 56.2 | 59.4 | 56.5 | 55.7 |

(Example 1: Preparation of urethane resin-molded article (1))

The polycarbonate polyol (1) obtained in Synthesis Example 1 and a formalin condensate of methylene diphenyl diisocyanate (MILLIONATE MR-200 manufactured by Nippon Polyurethane Industry Co., Ltd.) were mixed and stirred at a mixing ratio of NCO/OH of 1.00 (molar ratio), and the mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (1) was obtained.

(Example 2: Preparation of urethane resin-molded article (2))

The polycarbonate polyol (2) obtained in Synthesis Example 2 and a formalin condensate of methylene diphenyl diisocyanate (MILLIONATE MR-200 manufactured by Nippon Polyurethane Industry Co., Ltd.) were mixed and stirred at a mixing ratio of NCO/OH of 1.00 (molar ratio), and the mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (2) was obtained.

(Example 3: Preparation of urethane resin-molded article (3))

A hundred parts by mass of the polycarbonate polyol (3) obtained in Synthesis Example 3 and 25 parts by mass of benzyl butyl phthalate (hereinafter, abbreviated as "BBP") as a plasticizer were mixed. The mixture and a formalin condensate of methylene diphenyl diisocyanate (MILLIONATE MR-200 manufactured by Nippon Polyurethane Industry Co., Ltd.) were mixed and stirred at a mixing ratio of NCO/OH of 1.00 (molar ratio). The resulting mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (3) was obtained.

(Example 4: Preparation of urethane resin-molded article (4))

A hundred parts by mass of the polycarbonate polyol (4) obtained in Synthesis Example 4 and 25 parts by mass of a plasticizer BBP were mixed. The mixture and a carbodiimide modification product of 4,4'-diphenylmethane diisocyanate (CORONATE MX manufactured by Nippon Polyurethane Industry Co., Ltd.) were mixed and stirred at a mixing ratio of NCO/OH of 1.00 (molar ratio). The resulting mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (4) was obtained.

(Example 5: Preparation of urethane resin-molded article (5))

A hundred parts by mass of the polycarbonate polyol (5) obtained in Synthesis Example 5 and 25 parts by mass of a plasticizer BBP were mixed. The mixture and a formalin condensate of methylene diphenyl diisocyanate (MILLIONATE MR-200 manufactured by Nippon Polyurethane Industry Co., Ltd.) were mixed and stirred at a mixing ratio of NCO/OH of 1.00 (molar ratio). The resulting mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (5) was obtained.

(Example 6: Preparation of urethane resin-molded article (6))

A hundred parts by mass of the polycarbonate polyol (6) obtained in Synthesis Example 5 and 25 parts by mass of a plasticizer BBP were mixed. The mixture and a formalin condensate of methylene diphenyl diisocyanate (MILLIONATE MR-200 manufactured by Nippon Polyurethane Industry Co., Ltd.) were mixed and stirred at a mixing ratio of NCO/OH of 1.00 (molar ratio). The resulting mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (6) was obtained.

(Example 7: Preparation of urethane resin-molded article (7))

A hundred parts by mass of the polycarbonate polyol (7) obtained in Synthesis Example 7 and 25 parts by mass of a plasticizer BBP were mixed. The mixture and a formalin condensate of methylene diphenyl diisocyanate (MILLIONATE MR-200 manufactured by Nippon Polyurethane Industry Co., Ltd.) were mixed and stirred at a mixing ratio of NCO/OH of

1.00 (molar ratio). The resulting mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (7) was obtained.

(Example 8: Preparation of urethane resin-molded article (8))

The polycarbonate polyol (8) obtained in Synthesis Example 8 and a formalin condensate of methylene diphenyl diisocyanate (MILLIONATE MR-200 manufactured by Nippon Polyurethane Industry Co., Ltd.) were mixed and stirred at a mixing ratio of NCO/OH of 1.00 (molar ratio), and the mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (8) was obtained.

(Example 9: Preparation of urethane resin-molded article (9))

Eighty parts by mass of the polycarbonate polyol (1) obtained in Synthesis Example 1 and 20 parts by mass of a polyester polyol (POLYLITE OD-X-2195 manufactured by DIC Corporation) were mixed. The mixture and a formalin condensate of methylene diphenyl diisocyanate (MILLIONATE MR-200 manufactured by Nippon Polyurethane Industry Co., Ltd.) were mixed and stirred at a mixing ratio of NCO/OH of 1.00 (molar ratio). The resulting mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (9) was obtained.

(Example 10: Preparation of urethane resin-molded article (10))

Sixty parts by mass of the polycarbonate polyol (1) obtained in Synthesis Example 1 and 40 parts by mass of a polyester polyol (POLYLITE OD-X-2195 manufactured by DIC Corporation) were mixed. The mixture and a carbodiimide modification product of 4,4'-diphenylmethane diisocyanate (CORONATE MX manufactured by Nippon Polyurethane Industry Co., Ltd.) were mixed and stirred at a mixing ratio of NCO/OH of 1.00 (molar ratio). The resulting mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (10) was obtained.

(Example 11: Preparation of urethane resin-molded article (11))

Thirty parts by mass of the polycarbonate polyol (1) obtained in Synthesis Example 1 and 70 parts by mass of the polycarbonate polyol (9) obtained in Synthesis Example 9 were mixed. The mixture and a formalin condensate of methylene diphenyl diisocyanate (MILLIONATE MR-200 manufactured by Nippon Polyurethane Industry Co., Ltd.) were mixed and stirred at a mixing ratio of NCO/OH of 1.00 (molar ratio). The resulting mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (11) was obtained.

(Comparative Example 1: Preparation of urethane resin-molded article (C1))

A polyester polyol (POLYLITE OD-X-2195 manufactured by DIC Corporation) and a carbodiimide modification product of 4,4'-diphenylmethane diisocyanate (CORONATE MX manufactured by Nippon Polyurethane Industry Co., Ltd.) were mixed and stirred at a mixing ratio of NCO/OH of 1.00 (molar ratio), and the mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (C1) was obtained.

(Comparative Example 2: Preparation of urethane resin-molded article (C2))

The polycarbonate polyol (7) obtained in Synthesis Example 7 and a formalin condensate of methylene diphenyl diisocyanate (MILLIONATE MR-200 manufactured by Nippon Polyurethane Industry Co., Ltd.) were mixed and stirred at a mixing ratio of NCO/OH of 1.00 (molar ratio), and the mixture was injected into cylindrical molds with a diameter of 4.0 cm and a thickness of 1.2 cm. The molds were subjected to primary curing at 120°C for 2 hours and further to secondary curing at 110°C for 17 hours, so that a cylindrical urethane resin-molded article (C2) was obtained.

Using the urethane resin-molded articles obtained in the examples and comparative examples, the following evaluations were performed.

[Method for measuring JIS-A hardness]

The cylindrical urethane resin-molded articles obtained in Examples 1 to 11 and Comparative Examples 1 and 2 were used as test specimens, the JIS-A hardness of which was measured by the hardness measurement method prescribed in JIS-K-6253.

[Method for evaluating hydrolysis resistance]

Evaluation of hydrolysis resistance was determined by the hardness retention rate of the urethane resin-molded article. The cylindrical urethane resin-molded articles obtained in Examples 1 to 11 and Comparative Examples 1 and 2 were used as test specimens. The specimens were cured for 28 days in an atmosphere at 75°C and 95% humidity. The hardness retention rate was calculated by substituting the JIS-A hardness of the urethane resin-molded particle before and after the curing into the following formula, and an evaluation was made as follows.

Hardness retention rate (%) = (JIS-A hardness after the curing/JIS-A hardness before the curing) $\times$ 100

A: The hardness retention rate is 70% or more.
B: The hardness retention rate is 50% or more and less than 70%.
D: The hardness retention rate is less than 50%.

[Method for evaluating solvent resistance]

The evaluation of the solvent resistance was determined by mass changes before and after immersion of the urethane resin-molded article in a solvent. The cylindrical urethane resin-molded articles obtained in Examples 1 to 11 and Comparative Examples 1 and 2 were used as test specimens. The specimens were immersed in toluene and MEK for 7 days, respectively. The mass change rate was calculated by substituting the mass of the test specimens before and after the immersion into the following formula, and an evaluation was made as follows.

Mass change rate (%) = ((mass after the immersion - mass before the immersion)/(mass before the immersion)) $\times$ 100

Evaluation of solvent resistance:

(Toluene resistance)

A: The mass change rate is less than 10%.
B: The mass change rate is 10% or more and less than 30%.
C: The mass change rate is 30% or more and less than 50%.
D: The mass change rate is 50% or more.

(MEK resistance)

A: The mass change rate is less than 60%.
B: The mass change rate is 60% or more and less than 70%.
C: The mass change rate is 70% or more and less than 80%.
D: The mass change rate is 80% or more.

Table 2 shows the compositions of the urethane resin-molded articles (1) to (11) prepared in Examples 1 to 11 and the evaluation results, and the compositions of the urethane resin-molded article (C1) and (C2) prepared in Comparative Examples 1 and 2, and the evaluation results.

[Table 2]

| Table 2 | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|
| Urethane resin-molded article | | (1) | (2) | (3) | (4) | (5) | (6) | (7) | (8) | (9) | (10) | (11) | (C1) | (C2) |
| Polyol | Polycarbonate polyol (1) | 100 | | | | | | | | 80 | 60 | 30 | | |
| | Polycarbonate polyol (2) | | 100 | | | | | | | | | | | |
| | Polycarbonate polyol (3) | | | 100 | | | | | | | | | | |
| | Polycarbonate polyol (4) | | | | 100 | | | | | | | | | |
| | Polycarbonate polyol (5) | | | | | 100 | | | | | | | | |
| | Polycarbonate polyol (6) | | | | | | 100 | | | | | | | |
| | Polycarbonate polyol (7) | | | | | | | 100 | | | | | | |
| | Polycarbonate polyol (8) | | | | | | | | 100 | | | | | |
| | Polycarbonate polyol (9) | | | | | | | | | | | 70 | | 100 |
| | Polyester polyol | | | | | | | | | 20 | 40 | | 100 | |
| Polyisocyanate | | NCO-1 | NCO-1 | NCO-1 | NCO-2 | NCO-1 | NCO-1 | NCO-1 | NCO-1 | NCO-1 | NCO-2 | NCO-1 | NCO-2 | NCO-1 |
| Plasticizer (Parts by mass) | | | | 25 | 25 | 25 | 25 | 25 | | | | | | |
| Curing conditions | NCO/OH | 1.0 | 1.0 | 1.0 | 1.0 | 1.0 | 1.0 | 1.0 | 1.0 | 1.0 | 1.0 | 1.0 | 1.0 | 1.0 |

(continued)

| Table 2 | | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|---|
| Urethane resin-molded article | | | (1) | (2) | (3) | (4) | (5) | (6) | (7) | (8) | (9) | (10) | (11) | (C1) | (C2) |
| Evaluation Items | Hydrolysis resistance | JIS-A hardness (before evaluation) | 51 | 53 | 31 | 35 | 30 | 30 | 42 | 58 | 51 | 48 | 66 | 51 | 65 |
| | | JIS-A hardness (after evaluation) | 39 | 41 | 22 | 30 | 26 | 25 | 35 | 54 | 35 | 33 | 62 | 3 | 63 |
| | | Hardness retention rate % | A | A | A | A | A | A | A | A | B | B | A | D | A |
| | Solvent resistance | Toluene (weight increase rate %) | A | A | A | A | A | B | B | C | A | A | C | A | D |
| | | MEK (weight increase ate % | A | A | A | A | A | B | B | C | A | A | C | A | D |

Here is a description of the abbreviations in Tables 1 and 2.

DEG: Diethylene glycol
EG: Ethylene glycol
TEG: Triethylene glycol
TMP: Trimethylolpropane
BG: Butanediol
PEG200 PEG400: Polyethylene glycol
DPC: Diphenyl carbonate
DEC: Diethyl carbonate
NCO-1: Formalin condensate of methylene diphenyl diisocyanate (MILLIONATE MR-200 manufactured by Nippon Polyurethane Industry Co., Ltd.)
NCO-2: a carbodiimide modification product of 4,4'-diphenylmethane diisocyanate (CORONATE MX manufactured by Nippon Polyurethane Industry Co., Ltd.)

The evaluation results shown in Table 2 have demonstrated that the urethane resin-molded articles formed using the urethane resin composition according to the present invention have high hydrolysis resistance and high solvent resistance.

On the other hand, Comparative Example 1, which is an example using a urethane resin composition produced using a polyester polyol as a polyol component instead of a polycarbonate polyol, has been found to exhibit high solvent resistance, but to exhibit significantly insufficient hydrolysis resistance.

Comparative Example 2, which is an example using a urethane resin composition produced using, as a polyol component, a polycarbonate polyol outside the scope of the present invention, has been found to exhibit high hydrolysis resistance, but to exhibit significantly insufficient solvent resistance.

## Claims

1. A urethane resin composition comprising:

   a urethane resin that is a product of reaction of at least one polyol (A) comprising a polycarbonate polyol (a1) with a polyisocyanate (B),
   wherein the polycarbonate polyol (a1) is a compound produced using, as a raw material, at least one hydroxy compound (C) comprising a hydroxy compound (c1) represented by general formula (1):

   [Chem. 1]

   $$HO\left[(CH_2)_2O\right]_n H \qquad (1)$$

   wherein n is an integer of 1 to 7,
   wherein the polycarbonate polyol (a1) has a number average molecular weight in the range of 1000 to 4000, wherein said number average molecular weight is measured according to the description,
   wherein the polyisocyanate (B) comprises 4,4'-diphenylmethane diisocyanate, 2,4'-diphenylmethane diisocyanate, carbodiimide-modified diphenylmethane diisocyanate, or crude diphenylmethane diisocyanate, and wherein the hydroxy compound (c1) comprises a diethylene glycol.

2. The urethane resin composition according to claim 1,
   wherein the at least one polyol (A) further comprises at least one polyol (a2) selected from the group consisting of a polyester polyol, a polyether polyol, and a polycarbonate polyol other than the polycarbonate polyol (a1).

3. The urethane resin composition according to claim 1,
   wherein the at least one polyol (A) comprises 40% by mass or more of the polycarbonate polyol (a1).

4. The urethane resin composition according to claim 1,
   wherein the at least one hydroxy compound (C) comprises 40% by mass or more of the hydroxy compound (c1).

5. The urethane resin composition according to claim 1, which is for use in a printing roll or a coater roll.

6. A urethane resin-molded article comprising a product obtained by curing and molding the urethane resin composition according to any one of claims 1 to 5.

7. The urethane resin-molded article according to claim 6, which is a printing roll or a coater roll.

## Patentansprüche

1. Urethanharz-Zusammensetzung, umfassend:

   ein Urethanharz, das ein Reaktionsprodukt aus mindestens einem Polyol (A), das ein Polycarbonatpolyol (a1) umfasst, mit einem Polyisocyanat (B) ist,
   wobei das Polycarbonatpolyol (a1) eine Verbindung ist, die unter Verwendung mindestens einer Hydroxyverbindung (C) als Ausgangsmaterial hergestellt wird, die eine Hydroxyverbindung (c1) umfasst, die durch die allgemeine Formel (1) dargestellt wird:

   [Chem. 1]

$$HO\left[(CH_2)_2O\right]_nH \qquad (1)$$

   wobei n eine ganze Zahl von 1 bis 7 ist,
   wobei das Polycarbonatpolyol (a1) ein zahlenmittleres Molekulargewicht im Bereich von 1000 bis 4000 aufweist, wobei das zahlenmittlere Molekulargewicht gemäß der Beschreibung gemessen wird,
   wobei das Polyisocyanat (B) 4,4'-Diphenylmethandiisocyanat, 2,4'-Diphenylmethandiisocyanat, carbodiimidmodifiziertes Diphenylmethandiisocyanat oder rohes Diphenylmethandiisocyanat umfasst, und
   wobei die Hydroxyverbindung (c1) ein Diethylenglykol umfasst.

2. Urethanharz-Zusammensetzung gemäß 1,
   wobei das mindestens eine Polyol (A) ferner mindestens ein Polyol (a2) umfasst, das aus der Gruppe ausgewählt ist, die aus einem Polyesterpolyol, einem Polyetherpolyol und einem anderen Polycarbonatpolyol als dem Polycarbonatpolyol (a1) besteht.

3. Urethanharz-Zusammensetzung gemäß 1,
   wobei das mindestens eine Polyol (A) 40 Massen-% oder mehr des Polycarbonatpolyols (a1) umfasst.

4. Urethanharz-Zusammensetzung gemäß 1,
   wobei die mindestens eine Hydroxyverbindung (C) 40 Massen-% oder mehr der Hydroxyverbindung (c1) umfasst.

5. Urethanharz-Zusammensetzung gemäß 1, die zur Verwendung in einer Druckwalze oder einer Beschichtungswalze bestimmt ist.

6. Urethanharz-Formteil, umfassend ein Produkt, das durch Aushärten und Formen der Urethanharz-Zusammensetzung gemäß einem der Ansprüche 1 bis 5 erhalten wird.

7. Urethanharz-Formteil gemäß 6, das eine Druckwalze oder eine Beschichtungswalze ist.

## Revendications

1. Composition de résine d'uréthane comprenant :

   une résine d'uréthane qui est un produit de réaction d'au moins un polyol (A) comprenant un polyol polycarbonate (a1) avec un polyisocyanate (B),

dans laquelle le polyol polycarbonate (a1) est un composé produit en utilisant, comme matière première, au moins un composé hydroxylé (C) comprenant un composé hydroxylé (c1) représenté par la formule générale (1) :

[Chim. 1]

$$HO\left[(CH_2)_2O\right]_nH \qquad (1)$$

où n est un nombre entier compris entre 1 et 7,
le polyol polycarbonate (a1) ayant un poids moléculaire moyen en nombre compris entre 1 000 et 4 000, ledit poids moléculaire moyen en nombre étant mesuré conformément à la description,
dans lequel le polyisocyanate (B) comprend du diisocyanate de 4,4'-diphénylméthane, du diisocyanate de 2,4'-diphénylméthane, du diisocyanate de diphénylméthane modifié par un carbodiimide, ou du diisocyanate de diphénylméthane brut, et
dans lequel le composé hydroxylé (c1) comprend un diéthylène glycol.

**2.** Composition de résine d'uréthane selon la revendication 1,
dans laquelle l'au moins un polyol (A) comprend en outre au moins un polyol (a2) choisi dans le groupe constitué d'un polyester-polyol, d'un polyéther-polyol et d'un polycarbonate-polyol autre que le polycarbonate-polyol (a1).

**3.** Composition de résine d'uréthane selon la revendication 1,
dans laquelle l'au moins un polyol (A) comprend 40 % en masse ou plus du polyol polycarbonate (a1).

**4.** Composition de résine d'uréthane selon la revendication 1,
dans laquelle l'au moins un composé hydroxylé (C) comprend au moins 40 % en masse du composé hydroxylé (c1).

**5.** Composition de résine d'uréthane selon la revendication 1, destinée à être utilisée dans un rouleau d'impression ou un rouleau d'enduction.

**6.** Article moulé en résine d'uréthane comprenant un produit obtenu par durcissement et moulage de la composition de résine d'uréthane selon l'une quelconque des revendications 1 à 5.

**7.** Article moulé en résine d'uréthane selon la revendication 6, qui est un rouleau d'impression ou un rouleau d'enduction.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5301335 A
- GB 737895 A
- JP 2000302835 A
- US 4861909 A
- US 2010093119 A1
- US 5629402 A
- EP 0132967 A1
- US 3900688 A
- US 3867350 A
- US 3312653 A